Europäisches Patentamt

European Patent Office

Office européen des brevets

(19)

(11) **EP 1 276 332 A1**

(12) ## DEMANDE DE BREVET EUROPEEN

(43) Date de publication:
**15.01.2003 Bulletin 2003/03**

(51) Int Cl.⁷: **H04N 7/58**

(21) Numéro de dépôt: **02077428.7**

(22) Date de dépôt: **19.06.2002**

(84) Etats contractants désignés:
**AT BE CH CY DE DK ES FI FR GB GR IE IT LI LU
MC NL PT SE TR**
Etats d'extension désignés:
**AL LT LV MK RO SI**

(30) Priorité: **26.06.2001 FR 0108422**

(71) Demandeur: **Koninklijke Philips Electronics N.V.
5621 BA Eindhoven (NL)**

(72) Inventeurs:
• **Caprioglio, Myriam, Société Civile S.P.I.D.
75008 Paris (FR)**
• **Planterose, Thierry Société Civile S.P.I.D.
75008 Paris (FR)**
• **Morel, Cyrille, Société Civile S.P.I.D.
75008 Paris (FR)**

(74) Mandataire: **de la Fouchardière, Marie-Noelle
Société Civile "SPID"
156, Boulevard Haussmann
75008 Paris (FR)**

(54) **Multiplexage multicouches pour générer un flux de transport MPEG-2 à partir de flux élémentaires MPEG-2 et MPEG-4**

(57) L'invention concerne un émetteur comprenant un dispositif de multiplexage multicouches pour générer un flux de sortie ayant un débit de sortie, multiplexé à partir de flux d'entrée élémentaires ayant des débits élémentaires, le dispositif de multiplexage multicouches comportant au moins un premier multiplexeur, dit maître, et un deuxième multiplexeur en aval du maître, dit esclave, le multiplexeur maître recevant à au moins une entrée, un flux d'entrée, dit flux d'entrée multiplexé, multiplexé par le multiplexeur esclave à partir d'au moins un premier et un deuxième flux d'entrée élémentaires, et à au moins une deuxième entrée, un troisième flux d'entrée élémentaire, le multiplexeur maître ayant des moyens de contrôle dudit débit de sortie pour garantir un débit de sortie moyen minimum prédéterminé.

Application : télévision interactive.

FIG. 3

EP 1 276 332 A1

**Description**

L'invention concerne les transmissions numériques en général et plus particulièrement la partie multiplexage des données dans un système de télécommunications numériques. Elle s'applique notamment à un émetteur comprenant un dispositif de multiplexage multicouches pour générer un flux de sortie ayant un débit de sortie, multiplexé à partir de flux d'entrée élémentaires ayant des débits élémentaires.

L'invention concerne également un serveur comprenant un tel émetteur et un système comportant un tel serveur. Elle concerne aussi un procédé de multiplexage multicouches, un programme d'ordinateur et un signal pour transporter ledit programme.

L'invention a de nombreuses applications notamment dans les systèmes de télévision numérique interactive selon les standards MPEG-2 et MPEG-4.

Le transport des données de type MPEG-4 dans un flux de transport de type MPEG-2 est décrit dans le document ISO/IEC JTC1/SC29/WG11/N3050 publié par l'ISO (International Standardisation Organisation) en janvier 2000 sous le titre "Information Technology - Generic Coding of Moving Pictures and Audio: Systems; Amendment 7: Transport of ISO/IEC 14496 data over ISO/IEC 13818-1".

Un objet de l'invention est de proposer des moyens avantageux pour transporter, dans un flux de sortie ayant un débit de sortie donné, des flux élémentaires ayant des débits élémentaires, multiplexés selon un multiplexage multicouches. Par exemple, un premier multiplexage est réalisé entre deux flux élémentaires corrélés entre eux et un deuxième multiplexage est réalisé entre ce flux pré-multiplexé et d'autres flux élémentaires. L'invention permet de garantir le débit de sortie du flux de transport final.

Pour cela, un émetteur comprenant un dispositif de multiplexage multicouches est décrit pour générer un flux de sortie ayant un débit de sortie, multiplexé à partir de flux d'entrée élémentaires ayant des débits d'entrée élémentaires, le dispositif de multiplexage multicouche comportant au moins un premier multiplexeur, dit maître, et un deuxième multiplexeur en aval du maître, dit esclave, le multiplexeur maître recevant à au moins une première entrée, un premier flux élémentaire, et à au moins une deuxième entrée, un flux multiplexé, délivré en sortie du multiplexeur esclave à partir d'au moins un deuxième flux d'entrée élémentaire, le multiplexeur maître ayant des moyens de contrôle dudit débit de sortie pour garantir un débit de sortie moyen minimum prédéterminé, en fonction desdits débits élémentaires.

Selon une caractéristique importante de l'invention, les moyens de contrôle du débit de sortie comprennent un dispositif à mémoires tampons virtuelles associées aux flux d'entrée des multiplexeurs. Les mémoires tampons virtuelles comportent des vitesses de remplissage liées aux débits desdits flux d'entrée associés, de sorte que lorsqu'une mémoire tampon associée à un flux élémentaire en entrée du multiplexeur maître est pleine, un paquet de données est crée dans le flux de sortie à partir de données extraites dudit flux élémentaire associé et lorsqu'une mémoire tampon associée à un flux d'entrée multiplexé en entrée du multiplexeur maître est pleine, un paquet de données est crée dans le flux de sortie à partir de données extraites du flux élémentaire en entrée du multiplexeur esclave qui, parmi les flux d'entrée élémentaires du multiplexeur esclave, est associé à la mémoire tampon qui est pleine la première.

Selon une autre caractéristique de l'invention, les multiplexeurs comportent des horloges locales pour synchroniser localement les flux d'entrée par rapport à des bases de temps locales liées audits multiplexeurs. Les moyens de contrôle du débit de sortie comprennent des moyens de synchronisation globale comprenant une horloge locale maître liée au multiplexeur maître, une horloge locale esclave liée au multiplexeur esclave et des moyens de commande pour commander la synchronisation de l'horloge esclave sur l'horloge maître.

La description suivante, faite en regard des dessins ci-annexés, le tout donné à titre d'exemple non limitatif fera bien comprendre comment l'invention peut être réalisée.

La figure 1 est un schéma montrant un exemple de système de transmissions numériques selon l'invention.

La figure 2 est un schéma fonctionnel représentant un exemple de dispositif de multiplexage selon l'invention.

La figure 3 est un schéma de principe pour illustrer le fonctionnement d'un mode de réalisation d'un multiplexeur multicouches selon l'invention.

La figure 4 est un organigramme pour illustrer un procédé de multiplexage multicouches selon l'invention.

La description suivante illustre un exemple d'application de l'invention pour générer un flux de sortie de type MPEG-2 transport stream incorporant des données de type MPEG-4 selon l'amendement 7 à la norme MPEG-2 tel que décrit dans le document ISO/IEC JTC1/SC29/WG11/N3050 publié par l'ISO (International Standardisation Organisation) en janvier 2000 sous le titre "Information Technology - Generic Coding of Moving Pictures and Audio: Systems; Amendment 7: Transport of ISO/IEC 14496 data over ISO/IEC 13818-1". Selon cet exemple, le flux de sortie est obtenu à partir de flux d'entrée élémentaires de type MPEG-2 ou MPEG-4 elementary stream, et d'au moins un flux de données de type MPEG-4 multiplexé à partir de deux flux élémentaires de type MPEG-4 elementary streams par un multiplexeur normalisé de type "Flex Mux". Le multiplexeur "Flex Mux" est décrit dans le document de la norme MPEG-4 Systems ISO/IEC 14496-1 Information Technologies - Coding of audio-visual Objects, Part 1 : Systems, 1999. L'invention n'est pas limitée à cette application particulière. Notamment, l'invention peut avantageusement être utilisée dans des applications qui impliquent un multiplexage multicouches. Parmi des exemples de telles applications figurent des applications de télévision interactive pour des décodeurs numériques de type Set Top Boxes, des applications interactives pour appareils multimédia portables, des applications impliquant de la création de contenu numérique et des applications utilisant la norme MPEG-7.

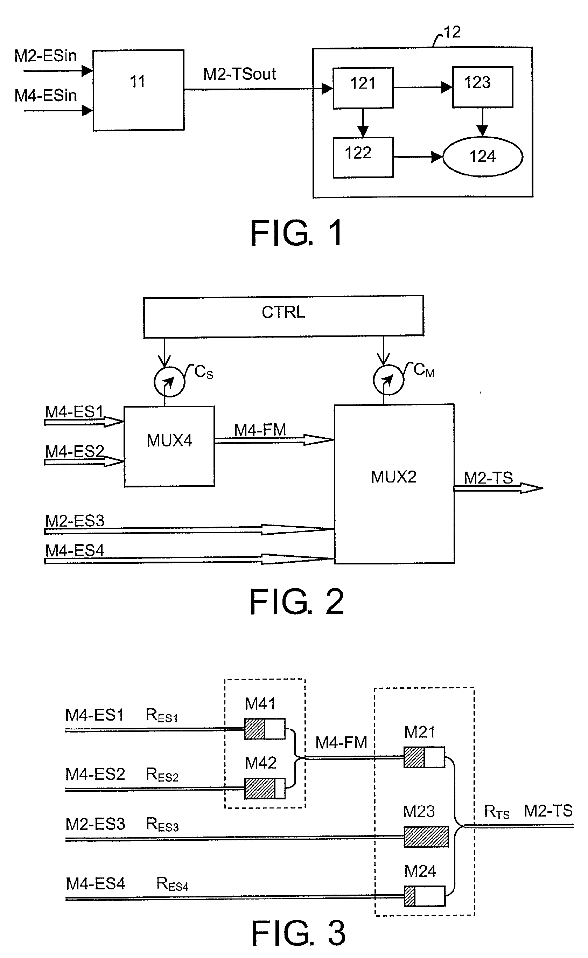

La figure 1 illustre un système de télévision numérique selon l'invention. Ce système comprend un serveur 11 pour générer, à partir de flux d'entrée élémentaires de type MPEG-2, M2-ESin, ou MPEG-4, M4-ESin, représentant des programmes vidéo, un flux de sortie de type MPEG-2 transport stream, M2-TSout, transportant des données de type MPEG-2 et MPEG-4 issues des flux d'entrée élémentaires. Le système comporte aussi un terminal 12 comprenant un bloc de démultiplexage 121, un décodeur MPEG-4 122 et un décodeur MPEG-2 123, pour récupérer les données multimédia en vue de les utiliser dans une application cliente 124.

Selon le standard MPEG-2, des informations sur le flux sont transmises sous la forme de tables PSI (Program System Information). Ces informations indiquent comment le flux est constitué. Elles renseignent sur le nombre et le type (audio MPEG-2, audio MPEG-4, vidéo MPEG-2, vidéo MPEG-4, etc.) des flux élémentaires transportés. Dans le flux de sortie qui est un flux de transport MPEG-2, tous ces différents flux avec leurs différentes données sont multiplexés avant leur émission par le serveur 11 à l'aide d'un dispositif de multiplexage contenu dans le serveur. Les tables PSI permettent en réception de reconstituer les programmes liés aux différents flux élémentaires.

La figure 2 est une représentation sous forme de schéma bloc d'un dispositif de multiplexage multicouches selon l'invention pouvant être utilisé dans le serveur 11 de la figure 1 ou plus généralement dans un émetteur destiné à émettre des données numériques multiplexées à destination d'un terminal. Il comprend un multiplexeur maître MUX2 fonctionnant selon une base de temps ou horloge maître $C_M$, un multiplexeur esclave MUX4 fonctionnant selon une base de temps ou horloge esclave $C_S$, et un dispositif de contrôle du débit de sortie CTRL. Le multiplexeur esclave MUX4 est un multiplexeur de type Flex Mux MPEG-4. Il est utilisé pour multiplexer des flux élémentaires de type MPEG-4, M4-ES1 et M4-ES2, qui sont corrélés entre eux. De façon avantageuse, ces flux transportent des programmes vidéos de type MPEG-4 concernant un même programme de base de type MPEG-4. Leur multiplexage préalable au transport dans un flux de transport MPEG-2 permet d'améliorer les performances du démultiplexage ultérieur. La sortie du multiplexeur esclave MUX4 est un flux de paquets multiplexés M4-FM contenant des données de type MPEG-4 multiplexées appartenant à deux flux élémentaires distincts. Le multiplexeur maître MUX2 est un multiplexeur de type MPEG-2 capable de recevoir des flux élémentaires de type MPEG-2 et MPEG-4. La façon dont le multiplexeur MUX2 peut encapsuler des données de type MPEG-4 dans un flux de transport MPEG-2 est décrite dans l'amendement 7 au standard MPEG2 déjà cité. Dans l'exemple décrit et illustré par les figures 2 à 4, le multiplexeur MUX2 reçoit en entrée le flux de paquets multiplexés M4-FM ainsi que deux flux élémentaires, M2-ES3 et M4-ES4 contenant des données de type MPEG-2 et MPEG-4 respectivement. Il délivre en sortie un flux de transport de type MPEG-2, M2-TS, transportant les données de tous les flux d'entrée multiplexés. Le nombre de flux multiplexés dans l'exemple est limité par souci de clarté mais l'invention s'applique quel que soit le nombre de flux d'entrée élémentaires ou pré-multiplexés. Le débit du flux de sortie M2-TS est garanti par le dispositif de contrôle CTRL.

Le dispositif de contrôle CTRL comprend un dispositif de gestion de la double couche de multiplexage pour gérer le multiplexage des données dans le flux de sortie à partir des flux d'entrée élémentaires, et un dispositif de gestion synchronisée des bases de temps $C_S$ et $C_M$ associées à chaque multiplexeur. Les multiplexeurs comportent des horloges locales pour synchroniser localement les flux d'entrée par rapport à des bases de temps locales liées audits multiplexeurs. Les moyens de contrôle du débit de sortie CTRL comprennent des moyens de synchronisation globale de l'horloge locale maître liée au multiplexeur maître avec l'horloge locale esclave liée au multiplexeur esclave mettant en oeuvre des moyens de commande pour commander la synchronisation de l'horloge esclave sur l'horloge maître.

Selon un mode de réalisation préférentiel de l'invention illustré à la figure 3, le dispositif de gestion de la double couche de multiplexage est un dispositif à mémoires tampons virtuelles M21, M22, M23, M41 et M42 associées aux flux d'entrée des multiplexeurs. Les mémoires tampons virtuelles sont des objets virtuels qui n'existent que par l'intermédiaire de deux valeurs, par exemple, l'une représentant leur taux de remplissage, l'autre leur vitesse de remplissage ou bien l'une représentant leur taille et l'autre leur taux de remplissage. Selon la première définition, les vitesses de remplissage dépendent des débits des flux d'entrée associés. Lorsqu'une mémoire tampon M23 ou M24, associée au flux élémentaire en entrée du multiplexeur maître MUX2 est pleine, un paquet de données est crée dans le flux de sortie M2-TS à partir de données extraites dudit flux élémentaire associé M2-ES3 ou M2-ES4. Lorsqu'une mémoire tampon associée à un flux d'entrée multiplexé M4-FM en entrée du multiplexeur maître MUX2 est pleine, un paquet de données est crée dans le flux de sortie M2-TS à partir de données extraites du flux élémentaire M4-ES1 ou M4-ES2 en entrée du multiplexeur esclave MUX4 qui, parmi les flux d'entrée élémentaires du multiplexeur esclave, est associé à la mémoire tampon M41 ou M42 qui est pleine la première.

Selon un mode de réalisation préférentiel de l'invention, le dispositif de gestion synchronisée des bases de temps $C_S$ et $C_M$ associées à chaque multiplexeur comprends un gestionnaire d'horloge pour contrôler les deux horloges $C_S$ et $C_M$ de la manière décrite ci-dessous. L'horloge maître $C_M$ est une horloge continue qui régule le trafic de sortie du multiplexeur maître dans le flux de sortie M2-TS. On appelle cycle de multiplexage primaire ou maître un cycle de multiplexage qui consiste à remplir les mémoires du multiplexeur maître MUX2 et on appelle cycle de multiplexage secondaire ou esclave un cycle de multiplexage qui consiste à remplir les mémoire du multiplexeur esclave. Le multiplexeur esclave a sa propre horloge $C_S$ qui est commandée par l'horloge maître $C_M$ par l'intermédiaire du gestionnaire d'horloge, qui peut la geler, la réinitialiser ou la remettre en route selon l'algorithme suivant :

- à l'instant initial T=0 de l'horloge maître $C_M$, l'horloge esclave $C_S$ est gelée,
- à chaque cycle de multiplexage primaire (ou maître),
- l'horloge maître $C_M$ est mise à jour,
- lorsqu'une mémoire tampon virtuelle associée à un flux multiplexé en sortie du multiplexeur esclave MUX4 est pleine,
- l'horloge esclave $C_S$ est remise en route,
- sa valeur est mise à jour avec la valeur de l'horloge maître $C_M$,
- le multiplexeur esclave MUX4 est déclenché de sorte qu'à chaque cycle de multiplexage secondaire (ou esclave), la valeur de l'horloge esclave $C_S$ est mise à jour.

Le fonctionnement du dispositif de contrôle CTRL représenté à la figure 3 va maintenant être décrit plus en détails. En supposant que les paquets transportés dans le flux de sortie ont une taille utile de $L_{TS}$ bits, la taille des mémoires tampons virtuelles peut être fixée, par exemple, à $L_{TS}$ bits. De cette façon, à chaque fois qu'une mémoire tampon virtuelle est pleine, un paquet de données de longueur inférieure ou égale à $L_{TS}$ peut être créé dans le flux de sortie M2-TS, la taille du paquet dépendant des éventuels entêtes qui doivent obligatoirement être ajoutés aux données utiles transportées. Pour garantir un débit de sortie moyen minimum prédéterminé, les mémoires tampons sont remplies à des vitesses ayant une relation de proportionnalité avec les débits des flux d'entrée qui leur sont associés. Le débit binaire du flux de sortie M2-TS est noté $R_{TS}$ et les débits binaires des flux élémentaires M4-ES1, M4-ES2, M2-ES3 et M4-ES4 sont notés $R_{ESj}$, avec j=1, 2, 3 ou 4, respectivement. Pour chaque cycle de multiplexage maître ou esclave, respectivement, les mémoires tampons virtuelles M41, M42, M23 et M24 sont remplies avec un nombre de bits noté Sj, avec j=1 à 4 respectivement. On a :

$$S_j = \frac{L_{TS}}{R_{TS}} \times R_{ESj} \qquad (1)$$

En revanche, la mémoire virtuelle M21 associée au flux d'entrée multiplexé M4-FM est remplie à chaque cycle de multiplexage maître avec un nombre de bits noté S* défini par l'équation suivante :

$$S^* = \frac{L_{TS}}{R_{TS}} \times \sum_{j=1}^{N_{MUX4}} R_{ESj} \qquad (2)$$

où $N_{MUX4}$ représente le nombre de flux élémentaires en entrée du multiplexeur esclave MUX4 et où le signe $\Sigma$ représente la somme des débits binaires des flux élémentaires en entrée du multiplexeur esclave.

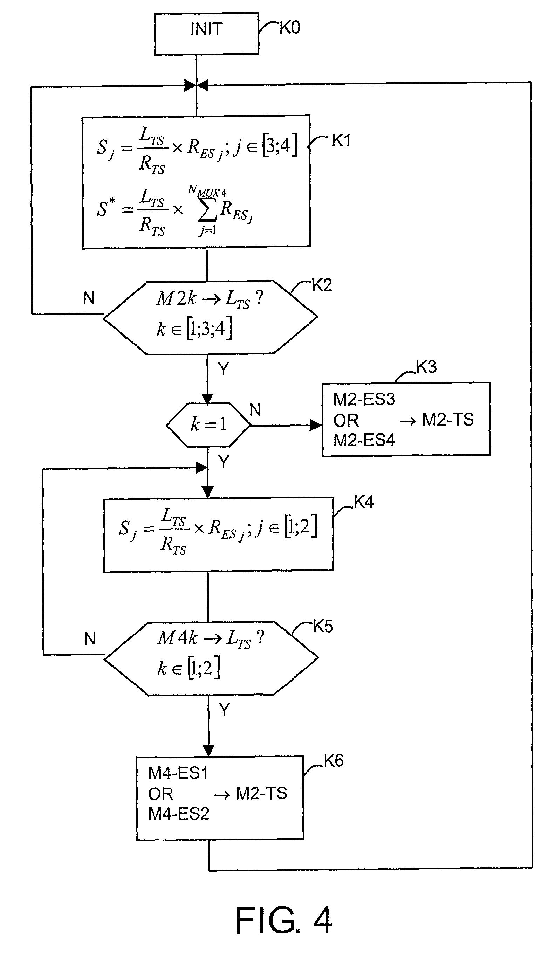

La figure 4 illustre les étapes d'un exemple de procédé de multiplexage multicouches selon l'invention, pour multiplexer, dans un flux de sortie à un débit de sortie, des données transportées dans des flux d'entrée élémentaires ayant des débits élémentaires, et des données transportées dans au moins un flux d'entrée à un débit d'entrée, dit débit multiplexé, multiplexé à partir de flux élémentaires ayant des débits élémentaires. Le procédé comporte notamment une étape de contrôle du débit de sortie, pour garantir un débit de sortie moyen minimum prédéterminé. L'étape de contrôle du débit de sortie comporte les sous-étapes suivantes :

- une étape K0 d'initialisation INIT pour initialiser des moyens de contrôle du débit de sortie, ces moyens comprenant un ensemble à mémoires tampons virtuelles ayant un taux de remplissage et des vitesses de remplissage déterminées en fonction des débits d'entrée élémentaires,
- une étape K1 cyclique primaire pour remplir les mémoires tampon associées aux flux d'entrée du multiplexeur maître, appelée aussi étape de multiplexage maître, de sorte que lors d'un cycle de remplissage primaire, le taux de remplissage des mémoires tampons virtuelles associées aux flux d'entrée du multiplexeur maître augmente selon les vitesses de remplissage déterminées,
- une étape K2 de détection primaire pour détecter qu'une mémoire tampon virtuelle associée à un flux d'entrée du multiplexeur maître est pleine,
- si la mémoire tampon détectée pleine est associée à un flux d'entrée élémentaire du multiplexeur maître (Y;N), une étape K3 primaire de création de données dans le flux de sortie, à partir de données extraites dudit flux élémentaire d'entrée,
- si la mémoire tampon détectée pleine est associée à un flux d'entrée multiplexé du multiplexeur maître (Y;Y), une étape K4 cyclique secondaire pour remplir les mémoires tampon associées aux flux d'entrée du multiplexeur esclave, appelée aussi étape de multiplexage esclave, de sorte que lors d'un cycle de remplissage secondaire, le taux de remplissage des mémoires tampons virtuelles augmente selon les vitesses de remplissage déterminées,

- une étape K5 de détection secondaire pour détecter qu'une mémoire tampon virtuelle associée à un flux d'entrée du multiplexeur esclave est pleine,
- lorsqu'une mémoire tampon virtuelle associée à un flux d'entrée du multiplexeur esclave est détectée pleine (Y), une étape K6 secondaire de création de données dans le flux de sortie, à partir de données extraites du flux élémentaire d'entrée du multiplexeur esclave associé à la mémoire tampon virtuelle détectée pleine.

Les vitesses de remplissage des mémoires tampons virtuelles sont déterminées en fonction des débits des flux d'entrée associés aux mémoires, d'après les équations (1) et (2) qui expriment le nombre de bits avec lequel les mémoires sont remplies à chaque cycle de remplissage.

Le procédé décrit ci-dessus est de préférence réalisé à l'aide d'un programme d'ordinateur comprenant des instructions de code de programme pour l'exécution des étapes du procédé, lorsque le programme est exécuté par un processeur situé par exemple dans un émetteur associé à un serveur de télévision numérique pour émettre des données à destination d'un terminal de télévision numérique distant.

On a ainsi décrit et illustré à l'aide d'exemples un émetteur et un serveur de télévision numérique, un système de télécommunications numériques et un procédé de multiplexage pouvant être réalisé dans un émetteur pour émettre des données à destination d'un terminal de télévision numérique. D'autres exemples de réalisation peuvent aisément être dérivés des modes décrits sans sortir du cadre de l'invention. En particulier, le nombre de flux d'entrée et de multiplexeurs esclaves n'est pas limité.

## Revendications

1. Emetteur comprenant un dispositif de multiplexage multicouches pour générer un flux de sortie ayant un débit de sortie, multiplexé à partir de flux d'entrée élémentaires ayant des débits élémentaires, le dispositif de multiplexage multicouche comportant au moins un premier multiplexeur, dit maître, et un deuxième multiplexeur en aval du maître, dit esclave, le multiplexeur maître recevant à au moins une première entrée, un premier flux élémentaire, et à au moins une deuxième entrée, un flux multiplexé, délivré en sortie du multiplexeur esclave à partir d'au moins un deuxième flux d'entrée élémentaire, le multiplexeur maître ayant des moyens de contrôle dudit débit de sortie pour garantir un débit de sortie moyen minimum prédéterminé, en fonction desdits débits élémentaires.

2. Emetteur selon la revendication 1, dans lequel lesdits moyens de contrôle du débit de sortie comprennent un dispositif à mémoires tampons virtuelles associées aux flux d'entrée des multiplexeurs, les mémoires tampons virtuelles comportant des vitesses de remplissage liées aux débits desdits flux d'entrée associés, de sorte que lorsqu'une mémoire tampon associée à un flux élémentaire en entrée du multiplexeur maître est pleine, un paquet de données est créé dans le flux de sortie à partir de données extraites dudit flux élémentaire associé et lorsqu'une mémoire tampon associée à un flux multiplexé en entrée du multiplexeur maître est pleine, un paquet de données est créé dans le flux de sortie à partir de données extraites du flux élémentaire en entrée du multiplexeur esclave qui, parmi les flux d'entrée élémentaires du multiplexeur esclave, est associé à la mémoire tampon qui est pleine la première.

3. Emetteur selon la revendication 1, dans lequel les multiplexeurs comportent des horloges locales pour synchroniser localement les flux d'entrée par rapport à des bases de temps locales liées audits multiplexeurs, et dans lequel lesdits moyens de contrôle du débit de sortie comprennent des moyens de synchronisation globale comprenant une horloge locale maître liée au multiplexeur maître, une horloge locale esclave liée au multiplexeur esclave et des moyens de commande pour commander la synchronisation de l'horloge esclave sur l'horloge maître.

4. Serveur dans un système de télécommunications numériques comportant un émetteur selon la revendication 1.

5. Système de télécommunications numériques comportant un serveur selon la revendication 4 et un terminal client destiné à recevoir le flux de sortie délivré par l'émetteur et à récupérer les données transportées dans ledit flux de sortie pour les utiliser dans une application cliente.

6. Procédé de multiplexage multicouches pour multiplexer, dans un flux de sortie à un débit de sortie, des données transportées dans des flux d'entrée élémentaires ayant des débits élémentaires, et des données transportées dans au moins un flux d'entrée multiplexé à un débit d'entrée dit débit multiplexé, à partir de flux élémentaires ayant des débits élémentaires, le procédé comportant une étape de contrôle du débit de sortie, pour garantir un débit de sortie moyen minimum prédéterminé.

7. Procédé selon la revendication 6, dans lequel l'étape de contrôle du débit de sortie comporte les sous-étapes suivantes :

- une étape d'initialisation pour initialiser des moyens de contrôle du débit de sortie, ces moyens comprenant un ensemble à mémoires tampons virtuelles ayant un taux de remplissage et des vitesses de remplissage déterminées en fonction des débits d'entrée élémentaires,
- une étape cyclique de remplissage primaire des mémoires tampon associées aux flux d'entrée du multiplexeur maître, de sorte que lors d'un cycle de remplissage primaire, le taux de remplissage des mémoires tampons virtuelles augmente selon les vitesses de remplissage déterminées,
- une étape de détection primaire pour détecter qu'une mémoire tampon virtuelle associée à un flux d'entrée du multiplexeur maître est pleine,
- si la mémoire tampon détectée pleine est associée à un flux d'entrée élémentaire du multiplexeur maître, une étape primaire de création de données dans le flux de sortie, à partir de données extraites dudit flux élémentaire d'entrée,
- si la mémoire tampon détectée pleine est associée à un flux d'entrée multiplexé du multiplexeur maître, une étape cyclique de remplissage secondaire des mémoires tampon associées aux flux d'entrée du multiplexeur esclave, de sorte que lors d'un cycle de remplissage secondaire, le taux de remplissage des mémoires tampons virtuelles augmente selon les vitesses de remplissage déterminées,
- une étape de détection secondaire pour détecter qu'une mémoire tampon virtuelle associée à un flux d'entrée du multiplexeur esclave est pleine,
- lorsqu'une mémoire tampon virtuelle associée à un flux d'entrée du multiplexeur esclave est détectée pleine, une étape secondaire de création de données dans le flux de sortie, à partir de données extraites du flux élémentaire d'entrée du multiplexeur esclave associé à la mémoire tampon virtuelle détectée pleine.

8. Programme d'ordinateur comprenant des instructions de code de programme pour l'exécution des étapes du procédé selon la revendication 6, lorsque ledit programme est exécuté par un processeur, notamment dans un émetteur selon l'une des revendications 1.

9. Signal pour transporter un programme d'ordinateur selon la revendication 8.

10. Signal pour transporter, dans un flux de sortie ayant un débit de sortie, des données provenant de flux d'entrée élémentaires ayant des débits d'entrée élémentaires, le signal étant obtenu par le procédé selon la revendication 6.

M2-ESin

M4-ESin

11

M2-TSout

12

121 → 123

122 → 124

## FIG. 1

CTRL

$C_S$

$C_M$

M4-ES1 → MUX4 → M4-FM → MUX2 → M2-TS

M4-ES2

M2-ES3

M4-ES4

## FIG. 2

M4-ES1  $R_{ES1}$  M41

M4-ES2  $R_{ES2}$  M42  M4-FM  M21

M2-ES3  $R_{ES3}$  M23  $R_{TS}$  M2-TS

M4-ES4  $R_{ES4}$  M24

## FIG. 3

FIG. 4

EP 1 276 332 A1

| | Office européen des brevets | **RAPPORT DE RECHERCHE EUROPEENNE** | Numéro de la demande<br>EP 02 07 7428 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X<br><br>Y | US 6 219 359 B1 (STEDMAN ROBERT JULIAN ET AL) 17 avril 2001 (2001-04-17)<br>* abrégé *<br>* colonne 1, ligne 66 - colonne 2, ligne 13 *<br>* colonne 2, ligne 53 - ligne 63 *<br>* colonne 3, ligne 38 - colonne 4, ligne 53 *<br>* figure 3 * | 1,4-6,<br>8-10<br>2,7 | H04N7/58 |
| Y | US 6 118 786 A (ACHOUR MAHA ET AL) 12 septembre 2000 (2000-09-12)<br>* abrégé *<br>* colonne 5, ligne 20 - ligne 35 *<br>* colonne 6, ligne 55 - ligne 61 *<br>* revendications 1,7 *<br>* figures 1C,4 * | 2,7 | |
| A | RIEMANN U: "DER MPEG-2-STANDARD GENERISCHE CODIERUNG FUR BEWEGTBILDER UND ZUGEHORIGER AUDIO-INFORMATION MULTIPLEX-SPEZIFIKATION FOR DIE FLEXIBLE UBERTRAGUNG DIGITALER DATENSTROME" FERNSEH UND KINOTECHNIK, VDE VERLAG GMBH. BERLIN, DE, vol. 48, no. 10, 1 octobre 1994 (1994-10-01), pages 545-550,553, XP000468290 ISSN: 0015-0142 * figure 8 * | 3 | DOMAINES TECHNIQUES RECHERCHES (Int.Cl.7)<br><br>H04N |
| A | EP 0 569 274 A (MATRA COMMUNICATION) 10 novembre 1993 (1993-11-10)<br>* abrégé *<br>* colonne 2, ligne 34 - ligne 51 *<br>* colonne 3, ligne 16 - ligne 20 *<br>* colonne 5, ligne 6 - ligne 15 *<br>* figure 1 * | 1-10 | |

-/--

Le présent rapport a été établi pour toutes les revendications

| Lieu de la recherche | Date d'achèvement de la recherche | Examinateur |
|---|---|---|
| LA HAYE | 16 août 2002 | Beaudet, J-P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

EP 1 276 332 A1

Office européen
des brevets

**RAPPORT DE RECHERCHE EUROPEENNE**

Numéro de la demande

EP 02 07 7428

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | SEYTTER F: "An efficient multiplex architecture for mobile MPEG-4 systems - Image Communication" , SIGNAL PROCESSING. IMAGE COMMUNICATION, ELSEVIER SCIENCE PUBLISHERS, AMSTERDAM, NL, VOL. 14, NR. 6-8, PAGE(S) 599-606 XP004165398 ISSN: 0923-5965 * alinéa [0004] * * figures 3,4 * | 1-10 | |

**DOMAINES TECHNIQUES RECHERCHES (Int.Cl.7)**

Le présent rapport a été établi pour toutes les revendications

| Lieu de la recherche | Date d'achèvement de la recherche | Examinateur |
|---|---|---|
| LA HAYE | 16 août 2002 | Beaudet, J-P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

10

**EP 1 276 332 A1**

## ANNEXE AU RAPPORT DE RECHERCHE EUROPEENNE
## RELATIF A LA DEMANDE DE BREVET EUROPEEN NO.

EP 02 07 7428

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-08-2002

| Document brevet cité au rapport de recherche | | Date de publication | Membre(s) de la famille de brevet(s) | | Date de publication |
|---|---|---|---|---|---|
| US 6219359 | B1 | 17-04-2001 | AU | 697308 B2 | 01-10-1998 |
| | | | AU | 6217096 A | 27-02-1997 |
| | | | CA | 2183813 A1 | 23-02-1997 |
| | | | EP | 0759667 A2 | 26-02-1997 |
| | | | JP | 9149388 A | 06-06-1997 |
| | | | US | 5708664 A | 13-01-1998 |
| US 6118786 | A | 12-09-2000 | US | 6421359 B1 | 16-07-2002 |
| | | | AU | 724356 B2 | 21-09-2000 |
| | | | AU | 4671497 A | 05-05-1998 |
| | | | EP | 0931418 A2 | 28-07-1999 |
| | | | JP | 2000514271 T | 24-10-2000 |
| | | | WO | 9816067 A2 | 16-04-1998 |
| EP 0569274 | A | 10-11-1993 | FR | 2690805 A1 | 05-11-1993 |
| | | | EP | 0569274 A1 | 10-11-1993 |

EPO FORM P0460

Pour tout renseignement concernant cette annexe : voir Journal Officiel de l'Office européen des brevets, No.12/82

11